# EUROPEAN PATENT APPLICATION

(11) **EP 4 387 061 A1**
(43) Date of publication of application: **19.06.2024**
(21) Application number: 22212710.2
(22) Date of filing: 12.12.2022
(51) Int. Cl.: H02K 9/197, H02K 9/19

(54) **A COOLING MEDIUM DISTRIBUTING DEVICE FOR AN ELECTRIC MOTOR AND AN ELECTRIC MOTOR**

(71) Applicant: Polestar Performance AB, 405 31 Gothenburg (SE)
(72) Inventor: Puccio, Gabriele, 90143 Palermo (IT); Raimondo, Michelangelo, 70033 Corato (IT); Nategh, Shafigh, 435 38 Mölnlycke (SE); Ekholm, David, 434 93 Vallda (SE)
(74) Representative: Zacco Sweden AB

(57) **Abstract**

The invention relates to a cooling medium distributing device (1) for an electric motor. The cooling medium distributing device (1) comprises an arc-shaped sleeve (2) adapted to at least partly enclose windings (3) of the electric motor, a first barrier element (4) extending outwardly from the sleeve (2) in a first radial direction (D1), a second barrier element (5) extending outwardly from the sleeve (2) in a second radial direction (D2), the first barrier element (4) and the second barrier element (5) being separated by a first arc angle (α₁), and a plurality of openings (6) arranged in the arc-shaped sleeve (2) and adapted to distribute a cooling medium through the sleeve (2) towards the windings (3) of the electric motor. The invention also relates to an electric motor.

## Description

### Technical field

The invention relates to a cooling medium distributing device for an electric motor and an electric motor.

### Background art

A motor is an electromagnetic device that implements power conversion or transmission according to the law of electromagnetic induction. A main function is to generate driving torque and serve as a power source of electric devices or various machines. The motor mainly includes a housing and a front-end cover and a rear end cover located at two ends of the housing. Inner walls of the housing, the front-end cover, and the rear end cover are surrounded to form a cavity in which a stator, a rotor, a coil, and a rotating shaft with one end extending from the front-end cover and the other end being rotatably connected to the rear end cover are disposed.

In some cases of a high-capacity electric motor having a large output, the temperature of the electric motor may not be lowered to a value equal to or lower than a predetermined temperature by the air-cooled cooling means because a heating amount is very large.

Therefore, cold water or an oil cooling manner is often adopted to dissipate heat for the motor. As a cooling medium, water has problems such as low power density of a water-cooled motor, large link thermal resistance, high interface thermal resistance ratio, needing to be filled with glue at an end portion of the coil, and lack of high-speed oil seal production. Due to these problems, oil cooling is increasingly widely used.

US 11,251,682 B2 discloses an electric motor including an oil spraying part. The oil spraying part is configured to store oil in a lower part of the case, that includes an oil passage configured to guide the oil to an upper area of the case and an oil pump for pumping the oil, and that is configured to spray the oil to an inner heating part of the case. Accordingly, the oil can suppress occurrence of short-circuiting of an electric circuit and rapidly cool a heating part.

In most of the solutions with oil cooling, some sort of sleeve is designed by either introducing a radial hole in the end windings or drilling axial holes in stator teeth, which results in non-uniform oil distribution and air gap losses in the windings.

### Summary on the invention

It is an objective of the present invention to mitigate, alleviate or eliminate one or more of the above-identified deficiencies in the art and disadvantages singly or in any combination and solve at least the above-mentioned problems.

According to a first aspect of the invention, these and other objects are achieved, in full or at least in part, by a cooling medium distributing device for an electric motor. The cooling medium distributing device comprises an arc-shaped sleeve adapted to at least partly enclose windings of the electric motor, a first barrier element extending outwardly from the sleeve in a first radial direction, a second barrier element extending outwardly from the sleeve in a second radial direction, the first barrier element and the second barrier element being separated by a first arc angle, and a plurality of openings arranged in the arc-shaped sleeve and adapted to distribute a cooling medium through the sleeve towards the windings of the electric motor.

This is advantageous in that the specific design of the two barriers arranged on the cooling medium distributing device allows for a better and more homogeneous distribution of oil on the windings of the electric motor. This will in turn lead to an increase of the heat transfer coefficient.

The second arc angle is defined by an arc length between two endpoints of the arc-shaped sleeve. The second arc angle may be 270 degrees or less.

An arc angle of 270° would help avoiding the collection of too much oil around the windings. In other words, the oil can be kept out of the air gap in the electric motor.

A gap formed between the endpoints may be arranged to be associated with a bottom circumference of the windings of the electric motor. There is, however, no contact between the sleeve and the windings.

The first arc angle preferably may be between 70 degrees and 110 degrees, more preferably between 80 degrees and 100 degrees, and most preferably about 90 degrees.

The plurality of openings may extend radially from an outer surface of the sleeve to an inner surface of the sleeve.

The cooling medium distributing device may further comprise a disc portion connected perpendicularly to an outer edge of the arc-shaped sleeve and extending radially inwards.

The cooling medium distributing device may further comprise a rim portion extending from an inward edge of the disc portion to form an air gap protecting portion for preventing the cooling medium to enter an air gap of the electric motor. This way, the friction losses can be completely removed.

The cooling medium distributing device may further comprise a side portion connected perpendicularly to an outer edge of the arc-shaped sleeve and extending radially outwards, wherein the plurality of openings extend axially from an outer surface of the side portion to an inner surface of the side portion.

This solution will allow the oil to spread directly onto the end windings. The creation of an oil film on the end windings surface, especially during transient operations, would result in a huge improvement on the heat extraction.

The first and second barrier may be connected to the side portion.

According to a second aspect of the invention, these and other objects are achieved, in full or at least in part, by an electric motor comprising a cooling medium distributing device as described above. The cooling medium distributing device is arranged to at least partly enclose windings of the electric motor.

Effects and features of the second aspect of the present invention are largely analogous to those described above in connection with the first aspect of the inventive concept. Embodiments mentioned in relation to the first aspect of the present invention are largely compatible with the further aspects of the invention.

Other objectives, features and advantages of the present invention will appear from the following detailed disclosure, from the attached claims, as well as from the drawings. It is noted that the invention relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

As used herein, the term "comprising", and variations of that term are not intended to exclude other additives, components, integers, or steps.

As used herein, the term "arc-shaped", and variations of that term includes both circular shapes but also rounded, such as hexagonal, octagonal, and the like.

As used herein, the term "outwardly", and variations of that term is meant outwardly from the outer surface of the sleeve and away from the centre of the sleeve.

### Brief description of the drawings

The above, as well as additional objects, features and advantages of the present invention, will be better understood through the following illustrative and non-limiting detailed description of embodiments of the present invention, with reference to the appended drawings, where the same reference numerals may be used for similar elements, and wherein:
Fig. 1a is a perspective view of one exemplary embodiment of a cooling medium distributing device according to the first aspect of the invention.
Fig. 1b is a perspective view of the cooling medium distributing device in Fig. 1a when arranged to enclose windings of an electric motor according to a second aspect of the invention.
Fig. 2a is a perspective view of another exemplary embodiment of the cooling medium distributing device according to the first aspect of the invention.
Fig. 2b is a perspective view of the cooling medium distributing device in Fig. 2a when arranged to enclose windings of the electric motor according to a second aspect of the invention.
Fig. 3a is a perspective view of another exemplary embodiment of the cooling medium distributing device according to the first aspect of the invention.
Fig. 3b is a perspective view of the cooling medium distributing device in Fig. 3a when arranged above the windings of the electric motor according to a second aspect of the invention.

### Detailed description of preferred embodiments of the invention

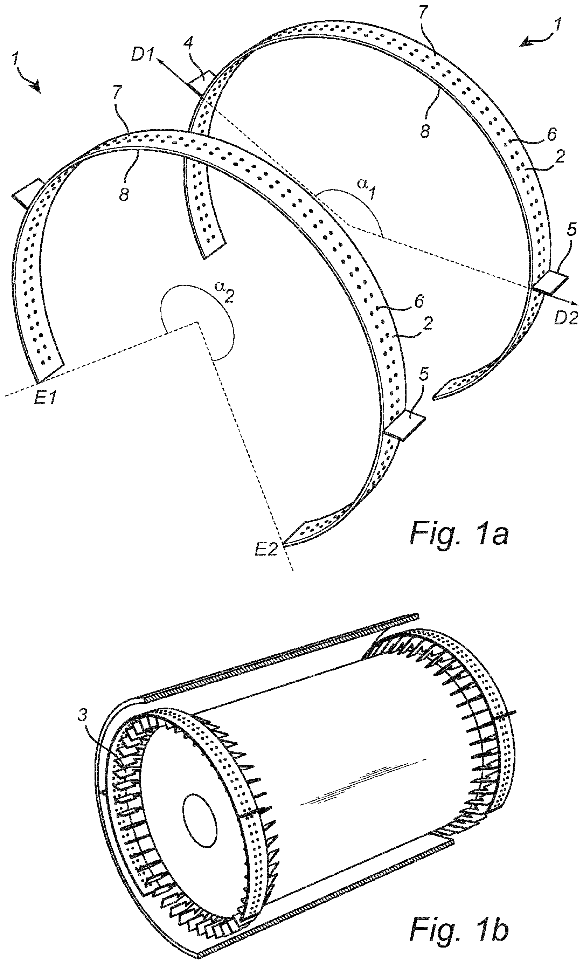

Fig. 1a illustrates an exemplary embodiment of a cooling medium distributing device 1 for an electric motor. The cooling medium distributing device 1 comprises an arc-shaped sleeve 2 which is adapted to at least partly enclose windings 3 of the electric motor. The sleeve 2 has a gap formed between the endpoints E1, E2 which is arranged to be associated with a bottom circumference of the windings 3 (no direct contact between the sleeve 2 and the windings 3) of the electric motor when the sleeve 2 is attached thereto (see Fig. 1b). Due to the specific design of the cooling medium distributing device 1 it is flexible and easy to attach to the windings 3. It will, for the same reason, be able to form a tight seal against the windings 3 when attached thereto.

The cooling medium distributing device 1 has a first barrier element 4 which extends outwardly from the sleeve 2 in a first radial direction D1 and a second barrier element 5 which extends outwardly from the sleeve 2 in a second radial direction D2. The first barrier element 4 and the second barrier element 5 are separated by a first arc angle α₁ which in this specific embodiment is approximately 120 degrees. Naturally, this first arc angle α₁ can be varied in any suitable range in order to achieve different results in terms of cooling. A suitable interval for the first arc angle α₁ could be in the range of 100 degrees to 140 degrees. By arranging the first barrier element 4 and the second barrier element 5 this way, they will extend more or less perpendicular in relation to the arc-shaped sleeve 2, in a direction away from the windings 3. The barrier elements 4, 5 are shaped as flat flanges extending across the entire width of the arc-shaped sleeve 2, respectively. They are also solid so that the cooling medium is hindered from passing the barrier elements 4, 5 in the circumferential direction of the arc-shaped sleeve 2. Naturally, it is possible to shape the barrier elements 4, 5 differently as long as the objection of the same is achieved in a satisfactory manner.

A plurality of openings 6 are arranged in the arc-shaped sleeve 2 which are adapted to distribute a cooling medium through the sleeve 2 towards the windings 3 of the electric motor. In this embodiment, the openings 6 extend radially from an outer surface 7 of the sleeve 2 to an inner surface 8 of the sleeve 2. The openings 6 are provided along the entire length of the sleeve 6 at a predetermined space from each other. Here, the openings 6 are provided in two rows extending along the circumference of the sleeve 2. Other alternatives are naturally possible. The openings 6 are round through holes extending through the entire depth of the arc-shaped sleeve 2.

A second arc angle α₂ is defined by an arc length between two endpoints E1, E2 of the arc-shaped sleeve. In this embodiment, the second arc angle α₂ is approximately 270 degrees or less. Naturally, this second arc angle α₂ can be varied in any suitable range in order to achieve different results in terms of cooling. A suitable interval for the second arc angle α₂ could be in the range of 260 degrees to 280 degrees. However, basically, the second arc angle α₂ could be anything that is 359 degrees or less.

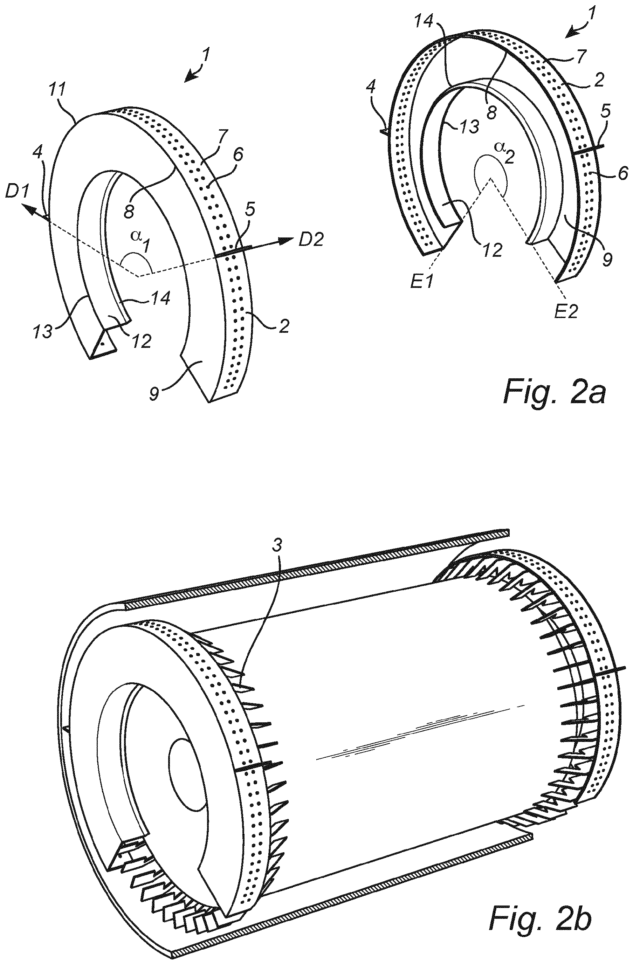

In Fig. 2a, another exemplary embodiment of the cooling medium distributing device 1 is illustrated. Here, the cooling medium distributing device 1 has a disc portion 9 connected perpendicularly to an outer edge 11 of the arc-shaped sleeve 2 and extending radially inwards. A rim portion 12 extends from an inward edge 13 of the disc portion 9 to form an air gap protecting portion 14 for preventing the cooling medium to enter an air gap of the electric motor. More specifically, it is the uppermost part of the rim portion 12 that forms the air gap protecting portion 14.The arc-shaped sleeve 2 and the rim portion 12 can be seen as an outer and an inner arc-shaped sleeve portion, radially spaced apart from each other, which are connected to each other by means of the disc portion 9. The arc-shaped compartment will this way have a bottom portion constituted by the disc portion 9 while the being open in the opposite direction. The remaining components correspond to the embodiment described in connections with Fig. 1a and Fig. 1b. By protecting the air gap, it is possible to prevent oil particles from entering. This way, the friction losses will be completely removed.

Fig. 2b shows the cooling medium distributing device 1 when arranged to at least partly enclose windings 3 of the electric motor.

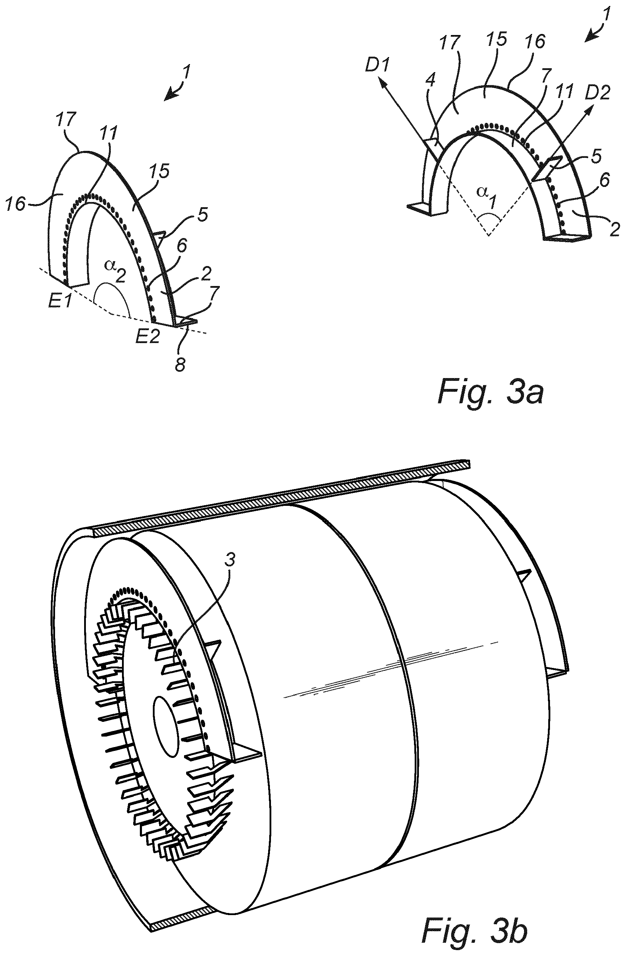

Fig. 3a illustrates another exemplary embodiment of the cooling medium distributing device 1. In this embodiment, the cooling medium distributing device 1 has a side portion 15 connected perpendicularly to the outer edge 11 of the arc-shaped sleeve 2 and extending radially outwards. The plurality of openings 6 extend axially from an outer surface 16 of the side portion 15 to an inner surface 17 of the side portion 15, i.e. through the side portion 15. The openings 6 are provided along the entire length of the sleeve 6 at a predetermined space from each other. Here, the openings 6 are provided in one separate row extending along the circumference of the sleeve 2. However, naturally, other solutions are possible in terms of shape and extension of the openings 6.

In this embodiment, the second arc angle α₂ is approximately 150 degrees or less. This second arc angle α₂ can be varied in any suitable range in order to achieve different results in terms of cooling. A suitable interval for the second arc angle α₂ could be in the range of 100 degrees to 200 degrees.

The first and second barrier element 4, 5 are connected both to the arc-shaped sleeve 2 as well as to the side portion 15. The barrier elements 4, 5 are shaped as flat flanges extending across the entire width of the arc-shaped sleeve 2, respectively. However, they will only extend a predetermined distance up along the height of the side portion 15. This predetermined distance is approximately 2/3 of the height of the side portion 15 in this specific embodiment of the cooling medium distributing device 1.

Fig. 3b shows the cooling medium distributing device 1 when arranged above the windings 3 of the electric motor. This solution allows for spreading of oil directly onto the end windings 3. The creation of an oil film on the end windings 3, especially during transient operations, will result in a big improvement on the heat extraction.

With the solutions available today, it is conventional to introduce sleeves with a radial hole in order to let the cooling medium drip into the windings of the electric motor. One drawback with such a solution is, for example, that oil will penetrate into the air gap and thereby increase the drag losses in the electric motor, which in turn will have a negative impact on the vehicle driving range. Another drawback is that the cooling medium distribution to the windings will not be uniform and thus the heat transfer ineffective.

Another available solution is the drilling of axial holes in the stator teeth which will lead to drawbacks, such as, cooling medium penetrating into the air gap with increased drag losses as an effect, and manufacturing issues due to the variation in geometry of the axial holes as another effect.

With the present invention there are several advantages. The two barrier elements 4, 5 arranged on the cooling medium distributing device 1 allows for a better and more homogeneous distribution of cooling medium onto the windings 3 of the electric motor, which in turn lead to an increase of the heat transfer coefficient.

It is understood that other variations in the present invention are contemplated and, in some instances, some features of the invention can be employed without a corresponding use of other features. Accordingly, it is appropriate that the appended claims be construed broadly in a manner consistent with the scope of the invention.

For instance, the size shape and number of the different components included in the cooling medium distributing device 1 may be varied in any suitable manner as long as the objectives of the inventions is maintained.

## Claims

1. A cooling medium distributing device (1) for an electric motor, comprising:
an arc-shaped sleeve (2) adapted to at least partly enclose windings (3) of the electric motor,
a first barrier element (4) extending outwardly from the sleeve (2) in a first radial direction (D1),
a second barrier element (5) extending outwardly from the sleeve (2) in a second radial direction (D2), the first barrier element (4) and the second barrier element (5) being separated by a first arc angle (α₁), and
a plurality of openings (6) arranged in the arc-shaped sleeve (2) and adapted to distribute a cooling medium through the sleeve (2) towards the windings (3) of the electric motor.

2. The cooling medium distributing device (1) according to claim 1, wherein a second arc angle (α₂) is defined by an arc length between two endpoints (E1, E2) of the arc-shaped sleeve (2), the second arc angle (α₂) being 270 degrees or less.

3. The cooling medium distributing device (1) according to claim 2, wherein a gap formed between the endpoints (E1, E2) is arranged to be associated with a bottom circumference of the windings (3) of the electric motor.

4. The cooling medium distributing device (1) according to any one of the preceding claims, wherein the first arc angle (α₁) preferably is between 90 degrees and 180degrees, more preferably between 110 degrees and 150 degrees, and most preferably about 120 degrees.

5. The cooling medium distributing device (1) according to any one of the preceding claims, wherein the plurality of openings (6) extend radially from an outer surface (7) of the sleeve (2) to an inner surface (8) of the sleeve (2).

6. The cooling medium distributing device (1) according any one of the preceding claims, further comprising a disc portion (9) connected perpendicularly to an outer edge (11) of the arc-shaped sleeve (2) and extending radially inwards.

7. The cooling medium distributing device (1) according to claim 6, further comprising a rim portion (12) extending from an inward edge (13) of the disc portion (9) to form an air gap protecting portion (14) for preventing the cooling medium to enter an air gap of the electric motor.

8. The cooling medium distributing device (1) according to any one of the claims 1 to 5, further comprising a side portion (15) connected perpendicularly to an outer edge (11) of the arc-shaped sleeve (2) and extending radially outwards, wherein the plurality of openings (6) extend axially from an outer surface (16) of the side portion (15) to an inner surface (17) of the side portion (15).

9. The cooling medium distributing device (1) according to claim 8, wherein the first and second barrier elements (4, 5) are connected to the side portion (15).

10. An electric motor, comprising a cooling medium distributing device (1) according to any one of the claims 1 to 9, wherein the cooling medium distributing device (1) is arranged to at least partly enclose windings (3) of the electric motor.
